Europäisches Patentamt

European Patent Office

Office européen des brevets

(11) Publication number: **0 484 605 A1**

# EUROPEAN PATENT APPLICATION

(21) Application number: **90403181.2**

(22) Date of filing: **08.11.90**

(51) Int. Cl.5: **H01M 4/02**, H01M 4/06

(43) Date of publication of application:
**13.05.92 Bulletin 92/20**

(84) Designated Contracting States:
**AT BE CH DE DK ES FR GB GR IT LI LU NL SE**

(71) Applicant: **SORAPEC Société de Recherches et d'Applications Electrochimiques
192 rue Carnot
F-94124 Fontenay-sous-BoisCédex(FR)**

(72) Inventor: **Bugnet, Bernard
40 rue des Cheminets-Pregnin
F-01630 Saint Genis/Pouilly(FR)**
Inventor: **Tassin, Noelle
1 rue Beauséjour
F-94120 Fontenay-Sous-Bois(FR)**
Inventor: **Potier, Thierry
23 rue des Bleuets
F-93330 Neuilly-sur-Marne(FR)**

(74) Representative: **Gutmann, Ernest et al
Ernest Gutmann - Yves Plasseraud S.A., 67, boulevard Haussmann
F-75008 Paris(FR)**

(54) **Porous zinc-electrode.**

(57) A zinc-based negative electrode having a three-dimensional lattice network of zinc-based active material.

Rank Xerox (UK) Business Services
(-/2.18/2.0)

This invention relates to a porous zinc structure, useful as a negative electrode.

## Background of the Invention

Porous metallic structures have been used in the electrochemical industry. Such structures have been made in the form of a three-dimensional lattice network which has defined a plurality of spaces in communication with one other.

These porous structures have been fabricated from porous supports which have been made of synthetic porous materials and which have been metallized to make them conductive, for example, by means of a physical or chemical surface treatment. Such a porous support has typically been an agglomerate of fibers such as a felt, a woven fabric or other reticulated structure. When a cellular support (e.g., a foam) has been employed, it has generally been "uncapped" (e.g., with sodium hydroxide) in order to obtain an open-pore structure in which the cells can communicate with each other. The structure thus obtained has then been coated, for example, with a conductive material by a physical or chemical process (e.g., by depositing a metal by reduction of ammoniacal silver nitrate in situ). If desired, a second metal coating has been deposited by a chemical and/or electrochemical process. On completion of these two coating steps, the initial structure has then been removed, and if necessary, the metal has been annealed. See French patent applications 7022469, 7917540 and 8401110.

## Summary of the Invention

In accordance with this invention, a novel porous metal structure is provided which is a multi-cell structure forming a zinc-based negative electrode for use in a primary battery in electrolytic cooperation with a positive electrode. The multi-cell structure comprises a three-dimensional lattice network of zinc-based active material that contains a plurality of inner voids in communication with one another and that has substantially continuous, electrically conductive paths within and throughout its volume.

## Detailed Description of the Invention

The porous metal structure of this invention can be manufactured in a well-known manner, starting from a porous support, preferably a reticulated fabric, particularly a felt or woven fabric, or a cellular support.

The preferred method of manufacture involves the following steps:

a) initial vacuum metallization of the porous support to form an electrically conductive pre-metallization layer on the support;

b) chemical and/or electrochemical (i.e., electrolytic) metallization, particularly electrochemical metallization, of the support with zinc to form a zinc-based network on the support, as well as on any pre-metallization layer; and then optionally

c) removal of the support.

Preferred methods of carrying out such steps are generally described in U.S. patent 4,882,232 (which is incorporated herein by reference).

The metallization step a) can be carried out in a conventional manner under vacuum upon a flat or substantially flat surface of the support. This step is, however, optional.

Likewise, the chemical or electrochemical metallization on the underlying support and on any pre-metallization layer on the support, to provide a zinc-based active material thereon, can be carried out in a conventional manner. If desired, step b) can include a second chemical or electrochemical metallization.

After the metallization step(s) b), the support can, optionally, be removed, for example by heat treatment. This reduces the weight of the porous metal structure and can increase its porosity and developed surface area. Thereafter, the structure can be annealed in a conventional manner to enhance the mechanical properties of the structure.

The support can be formed of an electrically inert material or an electrically conductive material or both, whereby in the porous metal structure of this invention, the support defines a plurality of inner spaces which are in communication with one another and which are intertwined with the zinc-based network thereon. The inner spaces of the support preferably define a total open-pore volume of at least 80% (volume/volume), preferably higher than 90%, before compression of the support and the porous metal structure when incorporating them into a battery.

A reticulated porous support, particularly a felt or woven fabric, can be formed of a non-conductive natural, synthetic or mineral substance, particularly a polymer such as, for example, a polyester, polyamide, polyurethane or polyether or, for a fibrous support, glass fibers, rock or carbon fibers, natural fibers, wool, cotton or the like. The support is preferably made of a polymer foam, such as polyurethane foam, having open pores within it. An otherwise non-conductive material of the support can also contain a filler material, such as carbon, which makes the support conductive.

With a cellular support, preferably a porous foam or sponge, a so-called "uncapping" operation should be performed prior to the vacuum metallization step a). Uncapping involves opening the pores of the support in order to obtain a porous zinc structure in step b) having a high degree of porosity or a large open-pore volume in which the openings in the lattice network communicate with each other completely or at least substantially. In this regard, the term "porous" herein indicates a surface area which is considerably larger than its apparent surface area and which has therefore an open-pore volume higher, for example, higher than 80% (volume/volume) or even higher than 90%, and in some cases on the order of 95% to 98%. Such an uncapping step can be carried out with an agueous solution of sodium or potassium hydroxide or the like.

During the vacuum metallization step a), the support is preferably mounted on a rotary device of the carousel type in order to present each face of the support towards the metal source. This device can possess additional degrees of freedom in order to permit the support to be inclined.

The metal employed in the vacuum metallization step a) can generally be any metal or alloy which is suited for use in the zinc-based negative electrode of this invention and for application by vaccum metallization, especially by cathode sputtering, gaseous diffusion or ionic deposition. By way of illustration, the following metals can be mentioned: platinum, platinum-base alloys, nickel, chromium, iron, copper, gold, silver, tin, aluminum, titanium, zinc, and alloys such as brass, bronze, Monel, ferro-chromium alloys, and combinations of these metals and alloys. Preferably, the pre-metallization layer is formed of copper or zinc. As a general rule, the vacuum metallization step a) is stopped when the metal coating, which is limited to the apparent surface of the support, attains a thickness within the approximate range of 0.05 micron to 1 micron or more. Thicknesses on the order of 0.1 micron are considered as particularly suitable.

Zinc is then deposited on the porous support, preferably by electrochemical metallization in step b), so as to provide the porous metal structure of this invention with preferably from .03 to 0.2 $g/cm^2$ of zinc. It is preferred that the zinc utilized contain less than 0.12 % (wt.) mercury, and its is particularly preferred that the zinc be free of mercury. The resulting zinc-based network is formed substantially as a coating on the surfaces, including those of the inner spaces, of the support and the pre-metallization layer thereon. Thereby, the zinc-based network is formed with inner voids that conform to the pores in the support and that define a total open-pore volume of at least 80% (volume/volume), preferably higher than 90%, before compression of the porous metal structure when forming it into a negative electrode to be incorporated into a battery. In this regard, the zinc is deposited on the support so that the resulting zinc-based network has inner voids extending within and throughout its volume and in communication with one another, and so that the network forms substantially continuous electrically conductive paths within and throughout its volume. The zinc-based network preferably has an apparent surface of 10 to 100 $cm^2/g$, and its inner voids preferably have a size of .05 to 0.5 mm. The zinc-based network can provide the resulting electrode with a large mass capacity relative to its weight and a relatively large negative potential in an alkaline medium in a battery. In this regard, inner voids of the zinc-based network are preferably filled with an aqueous alkaline electrolyte in a battery to provide the relatively large negative potential of the electrode of this invention, particularly in cooperation with a positive electrode based on manganese dioxide in such a battery.

When other then zinc has been deposited in step a), an annealing step can offer an additional advantage in promoting interdiffusion of the different deposited metals, which can result in their forming an alloy.

The following example illustrates this invention.

Example

There is employed, as a porous support, an element of polyurethane foam having a thickness of 1.5 mm, a width of mesh of 0.3 mm and a connective-strip thickness of 40 microns. The porous structure of the foam is uncapped by immersing the foam in a 6N potassium hydroxide solution at a temperature of 50° C for 15 minutes. The foam is then rinsed with water and dried.

The next step involves forming a coating of copper on the support by cathode sputtering during a period of 2 minutes. The thickness of deposited copper on the support is limited to 0.04 micron.

The copper-coated support is then electroplated with zinc, from a bath of zinc cyanide, over a period of 2 hours using a current density of 0.06 $A/cm^2$.

The resulting electrode has a relatively large mass capacity for its weight and a relatively large negative potential in alkaline media.

Of course, this invention is not limited to the specific example, set forth above, and it will be apparent to those skilled in the art that other electrodes could be made as described above, without thereby departing from the scope or the spirit of the invention.

**Claims**

1. A multi-cell structure forming a zinc-based negative electrode for use in a primary battery in electrolytic cooperation with a positive electrode; said cell structure comprising a three-dimensional lattice network of zinc-based active material containing a plurality of inner voids in communication with one another; said zinc-based network having substantially continuous, electrically conductive paths within and throughout its volume.

2. The cell structure of claim 1, wherein said zinc-based network comprises a porous foam, and wherein said plurality of inner voids consist of open pores.

3. The cell structure of claim 1 or 2 which includes a distinct support for said zinc-based network that: a) is formed of an electrically inert material, an electrically conductive material or both, b) defines a plurality of inner spaces in communication with one another, and c) is intertwined with said zinc-based network.

4. The cell structure of claim 3, wherein said zinc-based network is formed substantially as a coating on the surfaces, including those of the inner spaces, of said support to form said inner voids extending within and throughout the volume of said zinc-based network.

5. The cell structure of claim 4, wherein said support is made of a macromolecular organic material, such as a polyurethane, having inner spaces which are themselves open pores.

6. The cell structure of claim 4 or 5, which includes an electrically conductive pre-metallization layer sandwiched between said support and said zinc-based network.

7. The cell structure of claim 6, wherein said pre-metallization layer is deposited under vacuum on said support.

8. The cell structure of any of claims 3 to 7, wherein said zinc-based network is formed electrochemically on either said electrically conductive material of said support or said pre-metallization layer.

9. The cell structure of claim 8 in which said inner spaces of said support define a total open pore volume of at least 80 % (volume/volume), preferably higher than 90 %.

10. The cell structure of any of claims 1 to 9 having a porosity which provides an apparent surface of zinc of 10 to 100 $cm^2$ /g.

11. The cell structure of any of claims 1 to 10 which comprises from 0.03 to $0.2 g/cm^2$ of zinc.

12. The cell structure of any of claims 3 to 11, wherein said inner voids have sizes of 0.05 to 0.5 mm.

13. The cell structure of any of claims 1 to 12, wherein said inner voids can be filled with an electrolyte in said battery.

14. The cell structure of claim 13, wherein said electrolyte is an aqueous alkaline electrolyte.

15. The cell structure of any of claims 1 to 15 which contains less than 0.12 % of mercury in said zinc-based material.

16. The cell structure of claim 15 which is free of mercury.

17. A primary battery which contains the cell structure of any of claims 1 to 16 and in which the cell structure can cooperate electrolytically with a positive electrode based on manganese dioxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 017 702  (DUNLOP AUSTRALIA LTD) * Claims 1,2,8,9; page 6, example 3; page 1, paragraph 2; page 4, paragraphs 1,2 * | 1-6,8, 14,17 | H 01 M    4/02 H 01 M    4/06 |
| Y | | 7,9 | |
| D,Y | EP-A-0 151 064  (SORAPEC) * Claims 1,2,6,7,12; page 4, line 21 - page 5, line 20 * | 7,9 | |
| X | PATENT ABSTRACTS OF JAPAN, vol. 4, no. 56 (E-8)[538], 25th April 1980; & JP-A-55 25 988 (MATSUSHITA) 25-02-1980 * Abstract * | 1-4,8, 13,14 | |
| X | PATENT ABSTRACTS OF JAPAN, vol. 5, no. 70 (E-56)[742], 12th May 1981; & JP-A-56 19 869 (SUMITOMO) 24-02-1981 * Abstract * | 1-4,8, 13 | |
| X | US-A-3 287 166  (F.C. ARRANCE) * Claims 1,4,7,15,19,20; column 1, line 63 - column 2, line 54; column 3, lines 60-65; column 8, lines 44-50 * | 1-5,13, 14 | TECHNICAL FIELDS SEARCHED (Int. Cl.5) H 01 M |
| A | CHEMICAL ABSTRACTS, vol. 70, 1969, page 180, abstract no. 13867h, Columbus, Ohio, US; L.A. COHEN et al.: "Metal foams", & SPACE MIL. APPL. CELL. PLAST. SYST., ANNU. CONF., CELL. PLAST. DIV., SOC. PLAST. IND., 12th 1967, 2-C-1-2-C-8" * Abstract * | 1,2,5 | |

The present search report has been drawn up for all claims

| Place of search | Date of completion of the search | Examiner |
|---|---|---|
| THE HAGUE | 10-07-1991 | ANDREWS M.P. |

EPO FORM 1503 03.82 (P0401)